# FASCICULE DE BREVET EUROPEEN

(11) **EP 3 727 876 B1**
(45) Date de publication et mention de la délivrance du brevet: **16.08.2023**
(21) Numéro de dépôt: 18833465.0
(22) Date de dépôt: 11.12.2018
(51) Int. Cl.: B60C 1/00, C08L 7/00, C08K 3/04

(54) **COMPOSITION RÉTICULÉE SANS SOUFRE COMPRENANT UN COMPOSÉ PHÉNOLIQUE**
SCHWEFELFREIE VERNETZTE ZUSAMMENSETZUNG MIT EINER PHENOLISCHEN VERBINDUNG
SULFUR-FREE CROSSLINKED COMPOSITION COMPRISING A PHENOLIC COMPOUND

(30) Priorité: 21.12.2017 FR 1762733
(43) Date de publication de la demande: 28.10.2020
(73) Titulaire: COMPAGNIE GENERALE DES ETABLISSEMENTS MICHELIN, 63000 Clermont-Ferrand (FR)
(72) Inventeur: THUILLIEZ, Anne-Lise, 63040 CLERMONT-FERRAND CEDEX 9 (FR); GAVARD-LONCHAY, Odile, 63040 CLERMONT-FERRAND CEDEX 9 (FR)
(74) Mandataire: Louret, Sylvain
(86) Numéro de dépôt international: PCT/FR2018/053176
(87) Numéro de publication internationale: WO 2019/122586

(56) Documents cités:
- EP-A1- 1 226 932
- EP-A1- 2 581 237
- DE-A1- 19 802 864
- US-B2- 6 552 128

## Description

### Domaine technique de l'invention

La présente invention est relative aux compositions de caoutchouc à base d'élastomères, aux composites comprenant de telles compositions, ainsi qu'aux pneumatiques comprenant de telles compositions ou de tels composites.

### Art antérieur

Les nappes de renforcement des pneumatiques comprennent habituellement un mélange caoutchoutique et des câbles de renforcement, souvent métalliques et recouverts en surface de laiton. Ces nappes étant soumises à des contraintes importantes lors du roulage des pneumatiques, on comprend que l'adhésion entre la gomme et les éléments de renforcement est une propriété clé.

La fonction d'adhésion impose généralement des formulations spécifiques au mélange caoutchoutique, notamment la nécessité d'un taux de soufre et d'oxyde de zinc élevé, une faible quantité d'acide stéarique, la présence de sel de cobalt, l'emploi d'accélérateur à phase retard longue. Or ces systèmes de vulcanisation à fort taux de soufre constituent une forte contrainte lors de la fabrication de semi-finis, en particulier pour éviter des réticulations prématurées.

Il serait donc intéressant pour les manufacturiers de pneumatique de trouver des formulations de composition de caoutchouc permettant de s'affranchir du soufre dans les composites tout en permettant une bonne adhésion sur les câbles de renforcement.

Les documents WO 2017/081387 et WO 2017/081388 présentent une composition de caoutchouc et un composite à base d'une matrice polymère comportant un polymère diénique fonctionnel. Ce polymère diénique fonctionnel porte au moins un groupe aromatique substitué par au moins deux fonctions hydroxy vicinales. La réticulation de la composition de caoutchouc est réalisée par un système de vulcanisation ou à base d'un ou plusieurs composés peroxydes. De bonnes propriétés d'adhésion de la composition de caoutchouc au métal sont obtenues, mais nécessitent l'utilisation d'un polymère greffé. Il serait donc intéressant de disposer d'une solution plus simple permettant d'améliorer les propriétés d'adhésion.

La demande JP 2011252107 décrit une composition de caoutchouc ayant une bonne adhésion au métal, cette composition comprenant un élastomère diénique et du sel de cobalt. De l'acide gallique ou un hydrate d'acide gallique facilite la dissociation du sel de cobalt. La composition est réticulée avec un système à base de soufre. Bien que présentant de bonnes caractéristiques d'adhésion, cette composition met en oeuvre à la fois du soufre et un sel de cobalt.

Le document US 6552128 décrit une composition à base d'un polymère éthylène-propylène (EPDM), une résine de mélamine et un composé à base de résorcinol présentant, une bonne adhésion à une couche sans utilisation de couche adhésive.

De plus, l'amélioration de l'adhésion ne doit pas se faire au détriment de la rigidité de la composition.

Poursuivant ses recherches, la demanderesse a découvert une composition de caoutchouc permettant de résoudre les problèmes évoqués, présentant des caractéristiques d'adhésion à un élément de renfort particulièrement intéressantes, en particulier pour la constitution de composites destinés à des pneumatiques, tout en améliorant les propriétés de rigidité de ladite composition. La composition selon l'invention permet ainsi d'obtenir une excellente adhésion aux éléments de renfort et une bonne rigidité ne nécessitant ni vulcanisation ou sulfuration, ni présence de sels de cobalt.

### Description détaillée de l'invention

L'invention concerne une composition de caoutchouc à base d'au moins un élastomère diénique fortement insaturé, une charge renforçante et au moins un composé phénolique de formule générale (I) 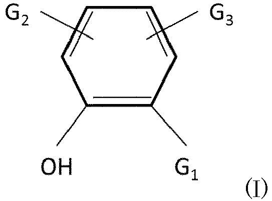 dans laquelle :
- G₁ représente un groupe hydroxyle, carboxyle, alcoxyle ou l'atome d'hydrogène ;
- G₂ représente un groupe hydroxyle ou l'atome d'hydrogène ;
- G₃ représente un groupe hydroxyle, carboxyle, hydrogénocarbonyle, carboxylalkyle, amino, aminoalkyle, ou l'atome d'hydrogène ;
au moins un des substituant G₁ à G₃ comprenant un atome d'oxygène, la masse molaire dudit composé phénolique étant au plus égale à 1000 g/mol,
ladite composition étant dépourvue de soufre moléculaire ou en comprenant moins de 1 pce.

### Définitions

Par l'expression "composition à base de", il faut entendre une composition comportant le mélange et/ou le produit de réaction *in situ* des différents constituants utilisés, certains de ces constituants (de base) pouvant réagir et/ou étant destinés à réagir entre eux, au moins partiellement, lors des différentes phases de fabrication de la composition, modifiant la composition telle qu'elle est préparée au départ. Ainsi les compositions telles que mises en oeuvre pour l'invention peuvent être différentes à l'état non réticulé et à l'état réticulé.

Par l'expression "partie en poids pour cent parties en poids d'élastomère" (ou pce), il faut entendre au sens de la présente invention, la partie, en masse pour cent parties en masse d'élastomère.

Dans la présente, sauf indication expresse différente, tous les pourcentages (%) indiqués sont des pourcentages (%) en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b). Dans la présente, lorsqu'on désigne un intervalle de valeurs par l'expression "de a à b", on désigne également et préférentiellement l'intervalle représenté par l'expression "entre a et b".

Les composés comprenant du carbone mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

### Elastomère

La composition selon l'invention, comprend au moins un élastomère diéniques fortement insaturé.

### • Élastomère diénique

Par élastomère diénique ou caoutchouc (les deux termes étant de manière connue synonymes et interchangeables), on rappelle que doit être entendu un élastomère qui est issu au moins en partie (i.e. un homopolymère ou un copolymère) de monomères diènes (monomères porteurs de deux doubles liaisons carbone-carbone, conjuguées ou non). Dans la présente demande, les élastomères diéniques sont par définition non thermoplastiques.

Les élastomères diéniques, présentant dans la très grande majorité des cas une Tg négative, c'est-à-dire inférieure à 0°C, peuvent être classés de manière connue en deux catégories : ceux dits "essentiellement insaturés" et ceux dits "essentiellement saturés".

Par élastomère diénique « essentiellement insaturé », on entend un élastomère diénique issu au moins en partie de monomères diènes conjugués, ayant un taux de motifs ou unités d'origine diénique (diènes conjugués) qui est supérieur à 15% (% en moles). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

A contrario, on entend par élastomère diénique « essentiellement saturé » des élastomères ayant un taux de motifs d'origine diénique faible ou très faible, toujours inférieur à 15% (% en moles), tels que les caoutchoucs butyl, comme par exemple les copolymères de diènes et d'alpha-oléfines type EPDM.

Ces définitions étant données, on entend plus particulièrement par élastomère diénique, quelle que soit la catégorie ci-dessus, susceptible d'être utilisé dans les compositions conformes à l'invention :
(a) tout homopolymère obtenu par polymérisation d'un monomère diène conjugué ayant de 4 à 12 atomes de carbone;
(b) tout copolymère obtenu par copolymérisation d'un ou plusieurs diènes conjugués entre eux ou avec un ou plusieurs composés vinyle aromatique ayant de 8 à 20 atomes de carbone;
(c) un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) un copolymère d'isobutène et d'isoprène (caoutchouc diénique butyl), ainsi que les versions halogénées, en particulier chlorées ou bromées, de ce type de copolymère.

Conviennent notamment à titre de diènes conjugués le butadiène-1,3, le 2-méthyl-1,3-butadiène, les 2,3-di(alkyle en C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. À titre de composés vinyle aromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinyle aromatiques.

On utilise au moins un élastomère diénique du type fortement insaturé, en particulier un élastomère diénique choisi dans le groupe constitué par le caoutchouc naturel (NR), les polyisoprènes de synthèse (IR), les polybutadiènes (BR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

À titre préférentiel conviennent les polybutadiènes et en particulier ceux ayant une teneur en unités -1,2 comprise entre 4% et 80% ou ceux ayant une teneur en cis-1,4 supérieure à 80%, les polyisoprènes, les copolymères de butadiène-styrène et en particulier ceux ayant une teneur en styrène comprise entre 5% et 50% en poids et plus particulièrement entre 20% et 40%, une teneur en liaisons -1,2 de la partie butadiénique comprise entre 4% et 65% , une teneur en liaisons trans-1,4 comprise entre 20% et 80%, les copolymères de butadiène-isoprène et notamment ceux ayant une teneur en isoprène comprise entre 5% et 90% en poids et une température de transition vitreuse de -40°C à -80°C, les copolymères isoprène-styrène et notamment ceux ayant une teneur en styrène comprise entre 5% et 50% en poids et une T_{g} comprise entre -25°C et -50°C.

Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités - 1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10% et 50%, et plus généralement tout copolymère butadiène-styrène-isoprène ayant une Tg comprise entre -20°C et 70°C.

Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent par exemple être préparés en dispersion ou en solution ; ils peuvent être couplés et/ou étoilés ou encore fonctionnalisés avec un agent de couplage et/ou d'étoilage ou de fonctionnalisation.

Pour un couplage à du noir de carbone, on peut citer par exemple des groupes fonctionnels comprenant une liaison C-Sn ou des groupes fonctionnels aminés tels que benzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778 ou US 6 013 718), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973). Comme autres exemples d'élastomères fonctionnalisés, on peut citer également des élastomères (tels que SBR, BR, NR ou IR) du type époxydés.

La T_{g} des polymères décrits ci-dessus est mesurée de manière connue par DSC (Differential Scanning Calorimetry), par exemple et sauf indications différentes spécifiées dans la présente demande, selon la norme ASTM D3418 de 1999.

### • Fonctionnalisation

Dans un arrangement particulier, la composition selon l'invention comprend au moins un élastomère fonctionnalisé. Par « fonctionnalisé », on entend qu'il est porteur d'un groupe fonctionnel, avantageusement d'un groupe fonctionnel comprenant une fonction telle qu'une fonction diène conjuguée, une fonction époxyde, une fonction carbonyle, une fonction anhydride ou une fonction ester d'acide, avantageusement d'un groupe fonctionnel choisi dans le groupe constitué par les groupes furanes, anthracènes, cyclopentadiènes, pyrroles, thiophènes et époxydes, avantageusement choisi dans le groupe constitué par le furane, l'anthracène, le cyclopentadiène, le fulvène et les groupes époxydes, très avantageusement choisi dans le groupe constitué par l'anthracène et les groupes époxydes.

Par « fonction diène conjuguée », bien connue de l'homme de l'art, on entend la présence de deux doubles liaisons carbone-carbone successives, qui peuvent être localisées soit le long de la chaîne de l'élastomère, soit sur une ramification de la chaîne élastomérique, auquel cas on parlera de fonction pendante.

Les fonctions présentes dans l'élastomère sont obtenues de manière connue de l'Homme du métier par copolymérisation ou par modification post-polymérisation, et sont soit portées directement par le squelette de la chaîne, soit portées par un groupe latéral selon le mode d'obtention.

Par exemple, les élastomères diéniques époxydés peuvent être obtenus par époxydation de l'élastomère diénique non époxydé équivalent, par exemple par des procédés à base de chlorohydrine ou de bromohydrine ou des procédés à base de peroxydes d'hydrogène, d'alkyl hydroperoxydes ou de peracides (tel que acide peracétique ou acide performique), voir notamment Kautsch. Gummi Kunstst. 2004, 57(3), 82, ou bien encore par copolymérisation radicalaire des monomères diéniques avec des monomères porteurs de fonctions époxydes, notamment les esters de l'acide méthacrylique comportant des fonctions époxydes, comme par exemple le méthacrylate de glycidyle (voir par exemple Macromolécules 1998, 31, 2822) ou par l'utilisation d'oxydes de nitrile porteurs de fonctions époxydes.

### Système de réticulation

La réticulation permet généralement d'améliorer les propriétés élastiques de la composition de caoutchouc.

Le système de réticulation est destiné à réagir pour causer la réticulation de la composition de caoutchouc.

De manière connue de l'Homme du métier, la réticulation des élastomères peut être mise en oeuvre de plusieurs manières en fonction de la nature desdits élastomères.

Tout type de réticulation, adapté selon les connaissances de l'Homme du métier aux élastomères utilisés dans la composition selon l'invention, peut être mis en oeuvre dans le cadre de l'invention, à condition qu'il soit dépourvu de soufre moléculaire, c'est-à-dire que le soufre ne soit pas l'ingrédient essentiel dudit système de réticulation.

Ainsi, la composition de caoutchouc conforme à l'invention est dépourvue de soufre moléculaire, ou en comprend moins de 1 pce, de préférence moins de 0,5 pce et plus préférentiellement moins de 0,2 pce. De manière très préférentielle, la composition ne comprend pas de soufre moléculaire comme agent de réticulation.

Lorsque l'élastomère de la composition selon l'invention est fonctionnalisé, des agents de réticulation particuliers peuvent être utilisés, selon la nature de la fonction portée par l'élastomère. Ainsi, on peut notamment réticuler les élastomères époxydés décrits précédemment par des polyacides, ou réticuler les élastomères présentant des doubles liaisons conjuguées décrits précédemment par des polydiénophiles.

### • Péroxydes

Le système de réticulation est avantageusement à base d'un ou plusieurs composés peroxydes, le ou lesdits composés peroxydes représentant de 0,01 à 10 pce.

Le peroxyde utilisable selon l'invention peut être tout peroxyde connu de l'homme de l'art.

De manière préférée, le peroxyde est choisi parmi les peroxydes organiques.

Par « peroxyde organique », on entend un composé organique, c'est-à-dire contenant du carbone, comportant un groupe -O-O- (deux atomes d'oxygène liés par une liaison covalente simple).

Durant le procédé de réticulation , le peroxyde organique se décompose au niveau de sa liaison instable O-O en radicaux libres. Ces radicaux libres permettent la création des liaisons de réticulation.

Selon un mode de réalisation, le peroxyde organique est choisi dans le groupe consistant en les peroxydes de dialkyle, les monoperoxycarbonates, les peroxydes de diacyle, les peroxycétales ou les peroxyesters.

De préférence, les peroxydes de dialkyle sont choisis dans le groupe consistant en le peroxyde de dicumyle, le peroxyde de di-t-butyle, peroxyde de t-butylcumyle , le 2,5-diméthyl-2,5-di(t-butylperoxy)hexane , le 2,5-diméthyl-2,5-di(t-amylperoxy)-hexane, le 2,5-diméthyl-2,5-di(t-butylperoxy)hexyne-3, le 2,5-diméthyl-2,5-di(t-amylperoxy)hexyne-3, a,a'-di-[(t-butyl-peroxy)isopropyl] benzène, le α,α'-di-[(t-amyl-peroxy)isopropyl] benzène, le peroxyde de di-t-amyle , le 1,3,5-tri-[(t-butylperoxy)isopropyl]benzène, le 1,3-diméthyl-3-(t-butylperoxy)butanol, et le 1,3-diméthyl-3-(t-amylperoxy) butanol.

Un mélange de peroxyde de dicumyle et de 1,3 et 1,4-isopropylcumyl cumyl peroxyde (commercialisé par exemple par Arkema sous le nom commercial Luperox^{®} DC60) est également intéressant.

Certains monoperoxycarbonates tels que le OO-tert-butyl-O-(2-éthylhexyl) monoperoxycarbonate, OO-tert-butyl-O-isopropyl monoperoxycarbonate et OO-tert-amyl-O-2-éthyl hexyl monoperoxycarbonate, peuvent également être utilisés.

Parmi les peroxydes de diacyles, le peroxyde préféré est le peroxyde de benzoyle.

Parmi les peroxycétales, les peroxydes préférés sont choisis dans le groupe consistant en le 1,1-di-(t-butylperoxy)-3,3,5-triméthylcyclohexane, le 4,4-di-(t-butylperoxy)valérate de n-butyle, le 3,3-di-(t-butylperoxy)butyrate d'éthyle, le 2,2-di-(t-amylperoxy)-propane, le 3,6,9-triethyl-3,6,9-trimethyl-1,4,7-triperoxynonane (ou peroxyde de méthyl éthyl cétone trimère cyclique), le 3,3,5,7,7-pentamethyl-1,2,4-trioxepane, le 4,4-bis(t-amylperoxy)valérate de n-butyle, le 3,3-di(t-amylperoxy)butyrate d'éthyle, le 1,1-di(t-butylperoxy)cyclohexane, le 1,1-di(t-amylperoxy)cyclohexane, et leurs mélanges.

De préférence, les peroxyesters sont choisis dans le groupe consistant en le tert-butylperoxybenzoate, le tert-butyleperoxy-2-ethylhexanoate et le tert-butyleperoxy-3,5,5-triméthylehexanoate.

De manière particulièrement préférée, le peroxyde organique est choisi dans le groupe consistant en le peroxyde de dicumyle, les peroxydes d'aryle ou de diaryle, le peroxyde de diacétyle, le peroxyde de benzoyle, le peroxyde de dibenzoyle, le peroxyde de ditertbutyle, le peroxyde de tertbutylcumyle, le 2,5-bis (tertbutylperoxy)-2,5-diméthylhexane, le n-butyl-4,4'-di(tert-butylperoxy) valérate, le OO-(t-butyl)-O-(2-éthylhexyl) monoperoxycarbonate, le tertio-butyl peroxyisopropylcarbonate, le tertio-butyl peroxybenzoate, le tert-butyl peroxy-3,5,5-triméthylhexanoate, le 1,3(4)-bis(tert-butylperoxyisopropyl)benzene et les mélanges de ces derniers, encore préférentiellement dans le groupe consistant en le peroxyde de dicumyle, le n-butyl-4,4'-di(tert-butylperoxy)-valérate, le OO-(t-butyl) O-(2-éthylhexyl) monoperoxycarbonate, le tertio-butyl peroxyisopropylcarbonate, le tertio-butyl peroxybenzoate, le tert-butyl peroxy-3,5,5-triméthylhexanoate, le 1,3(4)-bis(tert-butylperoxyisopropyl)benzene et les mélanges de ces derniers.

### • Polysulfure de thiurame

Le système de réticulation est avantageusement à base d'un ou plusieurs composés de type polysulfure de thiurame, le ou lesdits composés polysulfure de thiurame représentant de 0,5 à 15 pce.

Après cuisson, un tel agent de réticulation se révèle apporter une cohésion suffisante à la composition, sans lui conférer une réticulation véritable : la réticulation mesurable, via une méthode de gonflement classique connue de l'homme du métier, avoisine en fait le seuil de détection. De préférence, le taux de polysulfure de thiurame est compris entre 0,5 et 10 pce, plus préférentiellement compris dans un domaine de 1 à 5 pce. De tels composés sont connus de l'Homme du métier et décrit par exemple dans le document WO 2011/092124. À titre de composés polysulfure de thiurame utilisables comme système de réticulation chimique, on peut citer le disulfure de tétrabenzylthiurame ("TBzTD"), le disulfure de tétraméthylthiurame ("TMTD"), le tétrasulfure de dipentaméthylènethiurame ("DPTT") et les mélanges de tels composés.

### • Polyacides

Dans le cas particulier où la composition selon l'invention comprend un élastomère fonctionnalisé époxyde, le système de réticulation est avantageusement à base d'un ou plusieurs composés polyacides, le ou lesdits composés diacides représentant de 0,2 à 100 pce, de préférence de 0,2 à 50 pce, plus préférentiellement de 0,9 à 20 pce.

Par composé polyacide tel qu'un diacide, on entend un composé comprenant plusieurs fonctions acide carboxylique, par exemple deux fonctions acide carboxylique portées de part et d'autre d'un groupement A, A étant un groupement divalent hydrocarboné comprenant de 1 à 1800 atomes de carbones. De tels composés sont décrits par exemple dans la demande WO 2014/095582. Ledit système de réticulation à base d'un ou plusieurs composés polyacides comprend également un imidazole représentant de 0,01 à 4 équivalent molaire, de préférence de 0,01 à 3 équivalent molaire par rapport aux fonctions acide carboxyliques présentes sur le ou les composés polyacides. À titre de composés imidazoles utilisables comme système de réticulation chimique, on peut citer le 1,2-diméthylimidazole, le 1-décyl-2-méthylimidazole, ou le 1-benzyl-2-méthylimidazole, ce dernier étant préférentiel.

Par l'expression « équivalent molaire », bien connue de l'Homme du métier, il faut entendre le quotient entre le nombre de moles du composé ou d'une fonction concerné et le nombre de moles du composé ou de fonction de référence. Ainsi, 2 équivalents d'un composé ou de fonction B par rapport à un composé ou une fonction A représentent 2 moles du composé ou de fonction B lorsqu'une mole du composé ou de fonction A est utilisée.

### • Polydiénophile

Dans le cas particulier où la composition selon l'invention comprend un élastomère fonctionnalisé comprenant une fonction diène conjuguée, le système de réticulation est avantageusement à base d'un ou plusieurs poly-diénophile.

Conviennent en particulier les composés de formule générale (I) 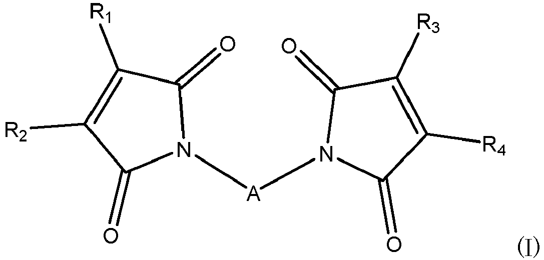 dans laquelle
- A représente une liaison covalente ou un groupement hydrocarboné comportant au moins 1 atome de carbone, éventuellement substitué et éventuellement interrompu par un ou plusieurs hétéroatomes,
- R₁, R₂, R₃ et R₄ représentent indépendamment les uns des autres des groupements identiques ou différents choisis parmi l'atome d'hydrogène et les groupements hydrocarbonés, R₁ et R₂ d'une part et R₃ et R₄ d'autre part pouvant former ensemble avec les atomes de carbone du cycle auxquels ils se rattachent, un cycle.

De préférence dans le poly-diénophile de formule générale (I), A représente une liaison covalente ou un groupement divalent hydrocarboné comportant de 1 à 1800 atomes de carbone, préférentiellement de 2 à 300 atomes de carbone, plus préférentiellement de 2 à 100 atomes de carbone, et de manière très préférentielle de 2 à 50 atomes de carbone. Au-dessus de 1800 atomes de carbone, le poly-diénophile est un agent de réticulation moins performant. Ainsi, A représente de préférence un groupement divalent hydrocarboné comportant de 3 à 50 atomes de carbone, préférentiellement de 5 à 50 atomes de carbone, plus préférentiellement de 8 à 50 atomes de carbone, et encore plus préférentiellement de 10 à 40 atomes de carbone.

Préférentiellement, A est un groupement divalent de type aliphatique, ou aromatique ou un groupement comportant au moins une partie aliphatique et une partie aromatique, et de préférence, un groupement divalent de type aromatique, ou un groupement comportant au moins une partie aliphatique et une partie aromatique. Plus préférentiellement, A est un groupement divalent comportant au moins une partie aliphatique et une partie aromatique de type arylène-dialkylène ou alkylène-diarylène; et notamment, A est préférentiellement un groupement phénylène-dialkylène (tel que phénylène-diméthylène ou phénylène-diéthylène) ou un groupement alkylène-diphénylène (tel que méthylène-diphénylène).

De préférence, lorsque A est interrompu, il l'est par au moins un hétéroatome choisi parmi l'oxygène, l'azote et le soufre, de préférence l'oxygène.

Selon un mode de réalisation préférentiel, A est substitué par au moins un radical choisi parmi les radicaux alkyle, cycloalkylalkyle, aryle, aralkyle, hydroxyle, alkoxy, amino et carbonyle.

Les radicaux R₁, R₂, R₃ et R₄ représentent indépendamment les uns des autres des groupements identiques ou différents choisis parmi l'atome d'hydrogène, les alkyles ayant de 1 à 20 atomes de carbone, les cycloalkyles ayant de 5 à 24 atomes de carbone, les aryles ayant de 6 à 30 atomes de carbone et les aralkyles ayant de 7 à 25 atomes de carbone; groupements qui peuvent éventuellement être interrompus par un ou plusieurs hétéroatomes et/ou substitués, R₁ et R₂ d'une part et R₃ et R₄ d'autre part pouvant former ensemble avec les atomes de carbone du cycle auxquels ils se rattachent, un cycle choisi parmi les cycles aromatiques, hétéroaromatiques ou aliphatiques, comprenant de 5 à 12 atomes de carbone, de préférence 5 ou 6 atomes de carbone. De préférence, R₁, R₂, R₃ et R₄ représentent indépendamment les uns des autres des groupements identiques ou différents choisis parmi l'atome d'hydrogène, et les alkyles linéaires ou ramifiés ayant de 1 à 6 atomes de carbone ; groupements qui peuvent éventuellement être substitué.

De préférence dans la composition selon l'invention, le taux de poly-diénophile est compris dans un domaine allant de 0,2 à 100 pce, de préférence de 0,2 à 50 pce. En effet En dessous de 0,2 pce de poly-diénophile, l'effet de la réticulation n'est pas sensible tandis qu'au-delà de 100 pce de poly-diénophile, le poly-diénophile, agent de réticulation, devient majoritaire en poids par rapport à la matrice polymérique. Ainsi, préférentiellement, le taux de poly-diénophile est compris dans un domaine allant de 0,4 à 27 pce, de préférence de 0,9 à 20 pce.

Les poly-diénophiles utiles pour les besoins de l'invention sont soit disponibles dans le commerce, soit facilement préparés par l'homme de l'art selon des techniques bien connues telles que les voies décrites par exemple dans le document Walter W. Wright and Michael Hallden-Abberton "Polyimides" in Ullmann's Encyclopedia of Industrial Chemistry, 2002, Wiley-VCH, Weinheim. doi:10.1002/14356007.a21_253*.*

Par exemple, à titre de poly-diénophiles disponibles dans le commerce et utiles aux besoins de l'invention, on peut citer les bis maléimides, et les bis-citraconimides.

Dans un arrangement préférée, la composition de caoutchouc selon l'invention est dépourvue de système de réticulation autre que l'un de ceux décrit précédemment, à base d'un ou plusieurs composés peroxydes, à base d'un ou plusieurs composés diacides, ou à base d'un ou plusieurs composés polydiénophiles. En particulier, lorsque le système de réticulation est à base d'un ou plusieurs composés peroxydes ou à base d'un ou plusieurs composés diacides, il est avantageusement dépourvu de système de vulcanisation, ou en contient moins de 1 pce, de préférence moins de 0,5 pce et plus préférentiellement moins de 0,2 pce. De même la composition est préférentiellement dépourvue de tout accélérateur ou activateur de vulcanisation, tels qu'ils sont connus de l'homme du métier, ou en contient moins de 1 pce, de préférence moins de 0,5 pce et plus préférentiellement moins de 0,2 pce.

Lorsque le système de réticulation avantageusement compris dans la composition selon l'invention est à base d'un ou plusieurs composés de type polysulfure de thiurame, il ne nécessite avantageusement pas la présence d'un autre agent de réticulation, ni soufre ni autre agent de vulcanisation additionnel (donneur de soufre, accélérateur ou activateur de vulcanisation). La composition de l'invention peut donc être avantageusement dépourvue de soufre ou de tels agents de vulcanisation additionnels, ou bien n'en comporter qu'une très faible quantité, moins de 1 pce, de préférence moins de 0,5 pce, plus préférentiellement moins de 0,2 pce. Selon un autre mode de réalisation avantageux, la composition de l'invention peut être également dépourvue de zinc ou oxyde de zinc (connus comme activateurs de vulcanisation), ou bien n'en comporter qu'une très faible quantité, moins de 1 pce, de préférence moins de 0,5 pce, plus préférentiellement moins de 0,2 pce.

### Charge renforçante

On peut utiliser tout type de charge renforçante connue pour ses capacités à renforcer une composition de caoutchouc utilisable pour la fabrication de pneumatiques, par exemple une charge organique telle que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à un élastomère isoprénique sous la forme d'un masterbatch (voir par exemple demandes WO 97/36724 ou WO 99/16600). Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

Par "charge inorganique renforçante", doit être entendu dans la présente demande, par définition, toute charge inorganique ou minérale (quelle que soit sa couleur et son origine naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HDS"), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, les silices à haute surface spécifique telles que décrites dans la demande WO 03/16837.

La charge inorganique renforçante utilisée, en particulier s'il s'agit de silice, a de préférence une surface BET comprise entre 45 et 400 m²/g, plus préférentiellement comprise entre 60 et 300 m²/g.

De manière préférentielle, le taux de charge renforçante totale (noir de carbone et/ou charge inorganique renforçante telle que silice) est compris entre 20 et 200 pce, plus préférentiellement entre 30 et 150 pce, l'optimum étant de manière connue différent selon les applications particulières visées : le niveau de renforcement attendu sur un pneumatique vélo, par exemple, est bien sûr inférieur à celui exigé sur un pneumatique apte à rouler à grande vitesse de manière soutenue, par exemple un pneu moto, un pneu pour véhicule de tourisme ou pour véhicule utilitaire tel que Poids lourd.

Selon un mode de réalisation préférentiel de l'invention, on utilise une charge renforçante comportant entre 30 et 150 pce, plus préférentiellement entre 50 et 120 pce de charge organique, particulièrement de noir de carbone, et optionnellement de la silice; la silice, lorsqu'elle est présente, est utilisée de préférence à un taux inférieur à 20 pce, plus préférentiellement inférieur à 10 pce (par exemple entre 0,1 et 10 pce).

Alternativement, selon un autre mode de réalisation préférentiel de l'invention, on utilise une charge renforçante comportant entre 30 et 150 pce, plus préférentiellement entre 50 et 120 pce de charge inorganique, particulièrement de silice, et optionnellement du noir de carbone ; le noir de carbone, lorsqu'il est présent, est utilisé de préférence à un taux inférieur à 20 pce, plus préférentiellement inférieur à 10 pce (par exemple entre 0,1 et 10 pce).

Pour coupler la charge inorganique renforçante à l'élastomère, on peut de manière optionnelle utiliser de manière connue un agent de couplage (ou agent de liaison) au moins bifonctionnel destiné à assurer une connexion suffisante, de nature chimique et/ou physique, entre la charge inorganique (surface de ses particules) et l'élastomère, en particulier des organosilanes, ou des polyorganosiloxanes bifonctionnels.

On peut utiliser notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

A titre d'exemples de silanes polysulfurés, on citera plus particulièrement les polysulfures (notamment disulfures, trisulfures ou tétrasulfures) de bis-(alkoxyl(C1-C4)-alkyl(C1-C4)silyl-alkyl(C1-C4)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfures, trisulfures ou tétrasulfures) de bis-(monoalkoxyl(C1-C4)-dialkyl(C1-C4)silylpropyl), plus particulièrement le tétrasulfure de bis-monoéthoxydiméthylsilylpropyl tel que décrit dans la demande de brevet US 2004/132880.

A titre d'agent de couplage autre qu'alkoxysilane polysulfuré, on citera notamment des POS (polyorganosiloxanes) bifonctionnels ou encore des polysulfures d'hydroxysilane tels que décrits dans les demandes de brevet WO 02/30939 et WO 02/31041, ou encore des silanes ou POS porteurs de groupements fonctionnels azo-dicarbonyle, tels que décrits par exemple dans les demandes de brevet WO 2006/125532, WO 2006/125533, WO 2006/125534.

Dans les compositions de caoutchouc conformes à l'invention, la teneur en agent de couplage est préférentiellement comprise entre 4 et 12 pce, plus préférentiellement entre 4 et 8 pce. Dans un autre arrangement, les compositions de caoutchouc conformes à l'invention ne comprennent pas d'agent de couplage.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, permettant d'établir la liaison entre la charge et l'élastomère en présence ou non d'un agent de recouvrement ou de couplage.

### Composé phénolique

La composition selon l'invention comprend au moins un composé phénolique de formule générale (I) 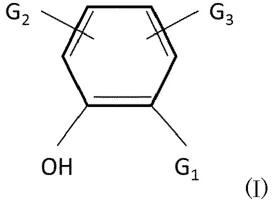 dans laquelle :
- G₁ représente un groupe hydroxyle, carboxyle, alcoxyle ou l'atome d'hydrogène ;
- G₂ représente un groupe hydroxyle ou l'atome d'hydrogène ;
- G₃ représente un groupe hydroxyle, carboxyle, hydrogénocarbonyle, carboxylalkyle, amino, aminoalkyle, l'atome d'hydrogène ;
au moins un des substituant G₁ à G₃ comprenant un atome d'oxygène, la masse molaire dudit composé phénolique étant au plus égale à 1000 g/mol, ladite composition étant dépourvue de soufre moléculaire ou en comprenant moins de 1 pce.

Dans la présente description, l'expression « composé phénolique » désigne le composé aromatique de formule générale (I).

Par groupe carboxyle, ou fonction acide carboxylique, on entend un groupe de formule - COOH dans lequel l'atome de carbone est lié par une double liaison à un atome d'oxygène et par une liaison simple à un groupe hydroxyle -OH.

Par groupe hydrogénocarbonyle, on entend un groupe de formule -CHO dans lequel l'atome de carbone est lié par une double liaison à un atome d'oxygène et par une liaison simple à un atome d'hydrogène.

Par groupe amino, on entend un groupe de formule -NH₂.

Par radical aminoalkyle, on entend un radical de formule -CₙH₂ₙ-NH₂, dans lequel n est un entier, avantageusement compris entre 1 et 15, préférentiellement entre 1 et 10, très préférentiellement entre 1 et 5, et de manière préférée entre 1 et 3.

De manière avantageuse, le composé phénolique de formule générale (I) est substitué par au moins deux groupes hydroxyles. De manière préférée, G₁, G₂ et G₃ représentent indépendamment un groupe hydroxyle ou l'atome d'hydrogène.

De manière avantageuse, le composé phénolique de formule générale (I) est substitué par au moins un groupe carboxyle.

De manière avantageuse, le composé phénolique de formule générale (I) est substitué au moins en position para d'un groupe hydroxyle. Par substitué en position para, on entend comme connu de l'Homme du métier que le noyau aromatique dudit composé phénolique est substitué en position 4, ledit groupe hydroxyle étant considéré comme en position 1, les positions 1 à 6 correspondant aux atomes de carbone constituant ledit noyau aromatique. De manière surprenante, la demanderesse a découvert que les propriétés d'adhésion de la composition selon l'invention étaient particulièrement améliorées lorsque que le composé phénolique de formule générale (I) était substitué au moins en position para d'un groupe hydroxyle, en particulier lorsque ledit composé phénolique est substitué en position para d'un groupe hydroxyle par un groupe carboxyle.

De manière avantageuse, G₁ et G₃ sont choisis indépendamment parmi les groupes hydroxyle, carboxyle et l'atome d'hydrogène.

Quel que soit le mode de réalisation préféré, la masse molaire du composé phénolique de formule générale (I) est au plus égale à 1000 g/mol, de manière préférée inférieure à 800 g/mol, préférentiellement inférieure à 600 g/mol, de manière très préférée inférieure à 400 g/mol, très préférentiellement inférieure à 220 g/mol, de manière très préférentielle inférieure à 200 g/mol, voire à 180 g/mol.

La composition de caoutchouc selon l'invention présente des caractéristiques d'adhésion à un composant métallique particulièrement intéressantes, notamment grâce à la présence du composé phénolique de formule générale (I), en particulier pour la constitution de composites, et tout particulièrement de composites à destination de pneumatiques, tout en améliorant les propriétés de rigidité de ladite composition.

La composition de caoutchouc selon l'invention comprend avantageusement de 0,1 à 25 pce de composé phénolique, préférentiellement de 2 à 15 pce. En deçà de 0,1 pce, le composé phénolique n'a pas d'effet notable sur les propriétés d'adhésion de la composition de caoutchouc selon l'invention. Au-delà de 25 pce, on n'observe plus de gain significatif.

De manière surprenante, une très bonne adhésion de la composition selon l'invention sur des câbles de renforcement est obtenue sans qu'il soit besoin d'utiliser de sels de cobalt. Ainsi, la composition selon l'invention est préférentiellement dépourvue de sels de cobalt, tels qu'ils sont connus de l'homme du métier, et dont l'effet connu est une amélioration de l'adhésion, ou en contient moins de 1 pce, de préférence moins de 0,5 pce, plus préférentiellement moins de 0,2 pce et très préférentiellement moins de 0,1 pce.

### Additifs divers

Les compositions de caoutchouc conformes à l'invention peuvent comporter également tout ou partie des additifs usuels, connus de l'homme de l'art et habituellement utilisés dans les compositions de caoutchouc pour pneumatiques, en particulier de couches internes telles que définies ultérieurement dans la présente demande, comme par exemple des plastifiants (huiles plastifiantes et/ou résines plastifiantes), des charges renforçantes ou non renforçantes autres que celles précitées, des pigments, des agents de protection tels que cires anti-ozone, anti-ozonants chimiques, anti-oxydants, des agents anti-fatigue, des résines renforçantes (telles que décrites par exemple dans la demande WO 02/10269).

Ces compositions peuvent également contenir, en complément des agents de couplage, des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes (par exemple l'octyltriéthoxysilane, ou silane octéo), des polyols, des polyéthers, des amines primaires, secondaires ou tertiaires, des polyorganosiloxanes hydroxylés ou hydrolysables.

### Préparation des compositions de caoutchouc

La composition de caoutchouc conforme à l'invention est fabriquée dans des mélangeurs appropriés, en utilisant des phases de préparation bien connues de l'homme du métier :
- une phase de travail ou malaxage thermomécanique, qui peut être conduite en une seule étape thermomécanique au cours de laquelle on introduit, dans un mélangeur approprié tel qu'un mélangeur interne usuel (par exemple de type 'Banbury'), tous les constituants nécessaires, notamment la matrice élastomérique, le composé phénolique, les charges, les éventuels autres additifs divers. L'incorporation de la charge à l'élastomère peut être réalisée en une ou plusieurs fois en malaxant thermomécaniquement. Dans le cas où la charge, en particulier le noir de carbone, est déjà incorporée en totalité ou en partie à l'élastomère sous la forme d'un masterbatch comme cela est décrit par exemple dans les demandes WO 97/36724 ou WO 99/16600, c'est le masterbatch qui est directement malaxé et le cas échéant on incorpore les autres élastomères ou charges présents dans la composition qui ne sont pas sous la forme de masterbatch, ainsi que les éventuels autres additifs divers.
   Le malaxage thermomécanique est réalisé à haute température, jusqu'à une température maximale comprise entre 110°C et 200°C, de préférence entre 130°C et 185°C, pendant une durée généralement comprise entre 2 et 10 minutes.
- une seconde phase de travail mécanique peut être ensuite réalisée dans un mélangeur externe tel qu'un mélangeur à cylindres, après refroidissement du mélange obtenu au cours de la première phase jusqu'à une plus basse température, typiquement inférieure à 120°C, par exemple entre 40°C et 100°C.

Le système de réticulation éventuel sera ajouté, conformément aux connaissances de l'Homme du métier, lors de la première ou de la seconde phase lorsque celle-ci est réalisée. Par exemple, un système de réticulation à base de polyacides ou de polydiénophiles sera typiquement ajouté lors de la première phase. Un système de réticulation à base de péroxydes sera typiquement ajouté lors de la seconde phase.

La composition finale ainsi obtenue est ensuite calandrée, par exemple sous la forme d'une feuille ou d'une plaque, notamment pour une caractérisation au laboratoire, ou encore extrudée sous la forme d'un semi-fini (ou profilé) de caoutchouc.

La composition peut être soit à l'état cru (avant réticulation ou vulcanisation), soit à l'état cuit (après réticulation ou vulcanisation), peut être un produit semi-fini qui peut être utilisé dans un pneumatique.

La cuisson peut être conduite, de manière connue de l'homme du métier, à une température généralement comprise entre 130°C et 200°C, sous pression, pendant un temps suffisant qui peut varier par exemple entre 5 et 90 min en fonction notamment de la température de cuisson, du système de réticulation adopté, de la cinétique de réticulation de la composition considérée ou encore de la taille du pneumatique.

### Composite

L'invention concerne également un composite à base au moins d'un composant et d'une composition de caoutchouc selon l'invention.

Par l'expression composite "à base au moins d'un composant et d'une composition selon l'invention", il faut entendre un composite comprenant le composant et ladite composition, la composition ayant pu réagir avec la surface du composant lors des différentes phases de fabrication du composite, en particulier au cours de la réticulation de la composition ou au cours de la confection du composite avant réticulation de la composition.

Ledit composant peut être tout ou partie métallique ou textile. En particulier, ledit composant peut être de nature textile, c'est-à-dire réalisé dans un matériau organique, notamment polymérique, ou inorganique, comme par exemple le verre, le quartz, le basalte ou le carbone. Les matériaux polymériques peuvent être du type thermoplastique, comme par exemple les polyamides aliphatiques, notamment les polyamides 6-6, et les polyesters, notamment le polyéthylène téréphthalate. Les matériaux polymériques peuvent être du type non thermoplastique, comme par exemple les polyamides aromatiques, notamment l'aramide, et la cellulose, naturelle comme artificielle, notamment la rayonne.

Dans un arrangement particulier, ledit composant comprend une surface métallique.

La surface métallique du composant constitue au moins une partie, et avantageusement la totalité de la surface dudit composant et est destinée à entrer au contact de la composition selon l'invention.

La composition selon l'invention enrobe au moins une partie du composant, avantageusement la totalité dudit composant.

Le composant est avantageusement en partie ou en intégralité métallique, la partie métallique comprenant au moins la surface métallique. De préférence la totalité du composant est en métal.

Selon une première variante de l'invention, la surface métallique du composant est faite d'un matériau différent du restant du composant. Autrement dit, le composant est fait d'un matériau qui est au moins en partie, avantageusement totalement, recouvert par une couche métallique qui constitue la surface métallique. Le matériau au moins en partie, avantageusement totalement, recouvert par la surface métallique est de nature métallique ou non métallique, de préférence métallique.

Selon une deuxième variante de l'invention, le composant est fait d'un même matériau, auquel cas le composant est fait d'un métal qui est identique au métal de la surface métallique.

Selon un mode de réalisation de l'invention, la surface métallique comprend un métal choisi dans le groupe constitué par le fer, le cuivre, le zinc, l'étain, l'aluminium, le cobalt, le nickel et les alliages comportant au moins un de ces métaux. Les alliages peuvent être par exemple des alliages binaires ou ternaires, comme l'acier, le bronze et le laiton. De préférence, le métal de la surface métallique est le fer, le cuivre, l'étain, le zinc ou un alliage comportant au moins un de ces métaux. De manière plus préférentielle, le métal de la surface métallique est l'acier, le laiton (alliage Cu-Zn), le zinc ou le bronze (alliage Cu-Sn), de manière encore plus préférée le laiton ou le zinc, et de manière très préférée le laiton.

Dans la présente demande, l'expression « le métal de la surface métallique est le métal ci-après désigné » revient à dire que la surface métallique est en métal ci-après désigné. Par exemple l'expression « le métal de la surface métallique est le laiton » écrite plus haut signifie que la surface métallique est en laiton. Certains métaux étant sujets à l'oxydation au contact de l'air ambiant, le métal peut être en partie oxydé, à l'exception de l'acier inoxydable.

Lorsque la surface métallique est en acier, l'acier est préférentiellement un acier au carbone ou un acier inoxydable. Lorsque l'acier est un acier au carbone, sa teneur en carbone est de préférence comprise entre 0.01% et 1.2% ou entre 0.05% et 1.2%, ou bien encore entre 0.2% et 1.2%, notamment entre 0.4% et 1.1%. Lorsque l'acier est inoxydable, il comporte de préférence au moins 11% de chrome et au moins 50% de fer.

Le composant peut être sous toute forme. De préférence le composant se présente sous la forme d'un fil ou d'un câble.

Selon un mode de réalisation particulier de l'invention, le composant présente une longueur qui est au moins égale au millimètre. On entend par longueur la plus grande dimension du composant. A titre de composant ayant une longueur qui est au moins égale au millimètre, on peut citer les éléments de renforcement par exemple utilisés dans le pneumatique pour véhicule, comme les éléments filaires (monofilament ou câble) et les éléments non filaires.

Selon un mode de réalisation particulièrement préférentiel de l'invention, le composite est une structure renforcée dans laquelle le composant constitue un élément de renforcement et dans laquelle la composition selon l'invention enrobe l'élément de renforcement.

Selon un mode de réalisation particulièrement préférentiel, le composite est un produit renforcé qui comprend des éléments de renforcement et une gomme de calandrage dans laquelle sont noyés les éléments de renforcement, chaque élément de renforcement consistant en un composant défini précédemment selon l'un quelconque des modes de réalisation de l'invention et la gomme de calandrage comprenant la composition de caoutchouc selon l'invention. Selon ce mode de réalisation, les éléments de renforcement sont agencés généralement côte à côte selon une direction principale. Pour une application envisagée dans le pneumatique, le composite peut donc constituer une armature de renforcement pour pneumatique.

Le composite conforme à l'invention peut être à l'état cru (avant réticulation de la composition de caoutchouc) ou à l'état cuit (après réticulation de la composition de caoutchouc). Le composite est cuit après mise en contact du composant avec la composition de caoutchouc selon l'invention.

Le composite peut être fabriqué par un procédé qui comprend les étapes suivantes :
- Réaliser deux couches de la composition selon l'invention,
- Prendre le composant en sandwich dans les deux couches en le déposant entre les deux couches,
- Le cas échéant cuire le composite.

Alternativement, le composite peut être fabriqué en déposant le composant sur une portion d'une couche, la couche est alors repliée sur elle-même pour couvrir le composant qui est ainsi pris en sandwich sur toute sa longueur ou une partie de sa longueur.

La réalisation des couches peut se faire par calandrage. Au cours de la cuisson du composite, la composition de caoutchouc est réticulée.

Lorsque le composite est destiné à être utilisé en tant qu'armature de renforcement dans un pneumatique, la cuisson du composite a lieu généralement lors de la cuisson de l'enveloppe du pneumatique.

### Pneumatique

Le pneumatique, autre objet de l'invention, a pour caractéristique essentielle de comprendre la composition ou le composite conforme à l'invention. Le pneumatique peut être à l'état cru (avant réticulation de la composition de caoutchouc) ou à l'état cuit (après réticulation de la composition de caoutchouc). Généralement, au cours de la fabrication du pneumatique, la composition ou le composite est déposé à l'état cru (c'est-à-dire avant réticulation de la composition de caoutchouc) dans la structure du pneumatique avant l'étape de cuisson du pneumatique.

L'invention concerne particulièrement des pneumatiques destinés à équiper des véhicules à moteur de type tourisme, SUV ("Sport Utility Vehicles"), ou deux roues (notamment motos), ou avions, ou encore des véhicules industriels choisis parmi camionnettes, « Poids-lourd », c'est-à-dire métro, bus, engins de transport routier (camions, tracteurs, remorques), véhicules hors-la-route tels qu'engins agricoles ou de génie civil, et autres.

Il est possible de définir au sein du pneumatique trois types de zones :
- La zone radialement extérieure et en contact avec l'air ambiant, cette zone étant essentiellement constituée de la bande de roulement et du flanc externe du pneumatique. Un flanc externe est une couche élastomérique disposée à l'extérieur de l'armature de carcasse par rapport à la cavité interne du pneumatique, entre le sommet et le bourrelet de sorte à couvrir totalement ou partiellement la zone de l'armature de carcasse s'étendant du sommet au bourrelet.
- La zone radialement intérieure et en contact avec le gaz de gonflage, cette zone étant généralement constituée par la couche étanche aux gaz de gonflage, parfois appelée couche étanche intérieure ou gomme intérieure (« inner liner » en anglais).
- La zone interne du pneumatique, c'est-à-dire celle comprise entre les zones extérieure et intérieure. Cette zone inclut des couches ou nappes qui sont appelées ici couches internes du pneumatique. Ce sont par exemple des nappes carcasses, des sous-couches de bande de roulement, des nappes de ceintures de pneumatiques ou tout autre couche qui n'est pas en contact avec l'air ambiant ou le gaz de gonflage du pneumatique.

La composition définie dans la présente description est particulièrement bien adaptée aux couches internes des pneumatiques.

Aussi, l'invention concerne également un pneumatique comprenant une couche interne comportant une composition ou un composite selon la présente invention. Selon l'invention, la couche interne peut être choisie dans le groupe constitué par les nappes carcasse, les nappes sommet, les bourrages-tringle, les pieds sommets, les couches de découplage, la sous-couche de bande de roulement et les combinaisons de ces couches internes. De préférence, la couche interne est choisie dans le groupe constitué par les nappes carcasses, les nappes sommet, les bourrages-tringle, les pieds sommets, les couches de découplage et les combinaisons de ces couches internes.

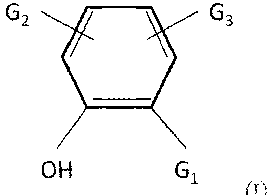

### Exemples

On procède pour préparer les différentes compositions de caoutchouc, de la manière suivante : on introduit dans un mélangeur interne (taux de remplissage final : environ 70% en volume), dont la température initiale de cuve est d'environ 60°C, successivement le polymère comprenant des fonctions époxyde, puis tous les autres constituants du mélange. On conduit alors un travail thermomécanique en une étape jusqu'à atteindre une température maximale de « tombée » de 150°C. On récupère le mélange ainsi obtenu, on le refroidit sur un mélangeur externe (homo-finisseur) à 30°C, en mélangeant le tout.

Les compositions de caoutchouc préparées sont présentées dans les tableaux 1 et 2.

**Tableau 1**

| | ***T1*** | ***T2*** | ***C1*** | **C2** | ***C3*** |
|---|---|---|---|---|---|
| *NR (1)* | 100 | 100 | 100 | 100 | 100 |
| *Noir de Carbone (2)* | 50 | 60 | 60 | 60 | 60 |
| *Dicumyl péroxide (3)* | 2,5 | 2,5 | 2,5 | 2,5 | 2,5 |
| *Polymère diénique greffé catéchol (4)* | 0 | 15 | 0 | 0 | 0 |
| *Acide Gallique (3)* | 0 | 0 | 5 | 0 | 0 |
| *Acide Protocatechuique (3)* | 0 | 0 | 0 | 5 | 0 |
| *Acide parahydroxybenzoique (3)* | 0 | 0 | 0 | 0 | 5 |

| | | | | | |
|---|---|---|---|---|---|
| Toutes les compositions sont données en pce | | | | | |

**Tableau 2**

| | ***C4*** | ***C5*** | ***C6*** | ***C7*** | ***C8*** | ***C9*** |
|---|---|---|---|---|---|---|
| *NR (1)* | 100 | 100 | 100 | 100 | 100 | 100 |
| *Noir de Carbone (2)* | 50 | 60 | 60 | 60 | 60 | 60 |
| *Dicumyl péroxide (3)* | 2,5 | 2,5 | 2,5 | 2,5 | 2,5 | 2,5 |
| *Acide salicylique (3)* | 5 | 0 | 0 | 0 | 0 | 0 |
| *Dopamine (3)* | 0 | 5 | 0 | 0 | 0 | 0 |
| *Phloroglucinol (3)* | 0 | 0 | 5 | 0 | 0 | 0 |
| *Résorcinol (3)* | 0 | 0 | 0 | 5 | 0 | 0 |
| *Guaiacol (3)* | 0 | 0 | 0 | 0 | 5 | 0 |
| *1,2,4-benzènetriol (3)* | 0 | 0 | 0 | 0 | 0 | 5 |

| | | | | | | |
|---|---|---|---|---|---|---|
| Toutes les compositions sont données en pce (1) Caoutchouc Naturel (2) N326 (3) Fournis par Sigma-Aldrich (4) poly(isoprene-co-dihydroxycinnamic methacrylate), Mn=6500 g/mol, Mw=15300 g/mol, groupe 3,4-dihydroxyaryl 0,92 meq/g fourni par la société Spécifie Polymers | | | | | | |

On note que la composition « T1 » ne comporte aucun composé phénolique spécifique. Le polymère diénique greffé cathécol correspond à l'enseignement de WO2017/081387. Il est introduit à 15 pce de manière à avoir, en mole, des quantités voisines de groupements polyphénol actifs introduits dans la composition par rapport aux autres composés testés.

### Exemple 1

La rigidité de la composition de caoutchouc est déterminée à l'aide d'essais de traction. Ces essais permettent de déterminer les contraintes d'élasticité et les propriétés à la rupture. Sauf indication différente, ils sont effectués conformément à la norme française NF T 46-002 de Septembre 1988. On mesure en seconde élongation (i.e. après un cycle d'accommodation au taux d'extension prévu pour la mesure elle-même) les modules sécants nominaux (ou contraintes apparentes, en MPa) à 10% d'allongement (noté MA10). Toutes ces mesures de traction sont effectuées dans les conditions normales de température (23 ± 2°C) et d'hygrométrie (50 ± 5% d'humidité relative), selon la norme française NF T 40-101 (Décembre 1979).

Les résultats sont exprimés en base 100 par rapport à la composition de caoutchouc « T1 » présentée dans le Tableau 1.

**Tableau 3**

| Composition | ***T1*** | ***T2*** | ***C1*** | ***C2*** | ***C3*** | ***C4*** | ***C5*** | ***C6*** | ***C7*** | ***C8*** | ***C9*** |
|---|---|---|---|---|---|---|---|---|---|---|---|
| MA10 | 100 | 106 | 151 | 121 | 139 | 117 | 121 | 124 | 108 | 107 | 106 |

### Exemple 2

La qualité de la liaison entre la composition de caoutchouc et le composant est déterminée par un test dans lequel on mesure la force nécessaire pour extraire des tronçons de fils unitaires présentant une surface métallique de la composition de caoutchouc réticulée. A cette fin, on prépare des composites sous la forme d'éprouvette contenant d'une part des fils unitaires métalliques à titre de composant présentant une surface métallique et d'autre part un mélange élastomère comprenant la composition de caoutchouc réticulée.

### • Préparation des éprouvettes

Les compositions de caoutchouc sont utilisées pour confectionner un composite sous la forme d'une éprouvette selon le protocole suivant :
On confectionne un bloc de caoutchouc constitué de deux plaques, appliquées l'une sur l'autre avant cuisson. Les deux plaques du bloc consistent en la même composition de caoutchouc. C'est lors de la confection du bloc que les fils unitaires sont emprisonnés entre les deux plaques à l'état cru, à égale distance et en laissant dépasser de part et d'autre de ces plaques une extrémité du fil unitaire de longueur suffisante pour la traction ultérieure. Le bloc comportant les fils unitaires est alors placé dans un moule adapté aux conditions de tests visées et laissées à l'initiative de l'homme de l'art ; à titre d'exemple, dans le cas présent, la cuisson du bloc est réalisée à 170°C pendant un temps variant de 25 min à 90 min selon la composition sous pression de 5.5 tonnes.

Les fils unitaires sont des fils en acier recouvert de laiton. Leur diamètre est de 1,75 mm ; l'épaisseur du revêtement en laiton est de 200 nm à 1 µm.

Les éprouvettes ainsi préparées avec des compositions conformes à l'invention correspondent à des composites conformes à l'invention.

### • Test d'adhésion

A l'issue de la cuisson, l'éprouvette ainsi constituée du bloc réticulé et des fils unitaires est mise en place dans les mâchoires d'une machine de traction adaptée pour permettre de tester chaque tronçon isolément, à une vitesse et une température données (par exemple, dans le cas présent, à 100 mm/min et température ambiante).

On caractérise les niveaux d'adhésion en mesurant la force dite d'arrachement pour arracher les tronçons de l'éprouvette.

Les résultats sont exprimés en base 100 par rapport à une éprouvette témoin qui contient des fils unitaires de nature identique à l'éprouvette testée et qui contient la composition de caoutchouc « T1 » présentée dans le Tableau 1.

Une valeur supérieure à celle de l'éprouvette témoin, arbitrairement fixée à 100, indique un résultat amélioré, c'est-à-dire une force d'arrachement supérieure à celle de l'éprouvette témoin dont la valeur est arbitrairement fixée à 100.

**Tableau 4**

| Composition | ***T1*** | ***T2*** | ***C1*** | ***C2*** | ***C3*** | ***C4*** | ***C5*** | ***C6*** | ***C7*** | ***C8*** | ***C9*** |
|---|---|---|---|---|---|---|---|---|---|---|---|
| Laiton | 100 | 1733 | 2467 | 3400 | 2317 | 167 | 317 | 583 | 200 | 133 | 1283 |

Le tableau 4 montre les résultats des tests d'adhésion effectués sur des éprouvettes témoins et sur des éprouvettes conformes à l'invention.

Présentant des valeurs très supérieures à 100 dans le test d'adhésion, les composites conformes à l'invention présentent une résistance à l'arrachement fortement améliorée.

Il est aussi remarquable de noter que l'amélioration de la performance du composite est observée en l'absence de toute étape de sulfuration généralement nécessaire dans la fabrication des composites.

## Revendications

1. Composition de caoutchouc à base d'au moins un élastomère diénique fortement insaturé, une charge renforçante et au moins un composé phénolique de formule générale (I) 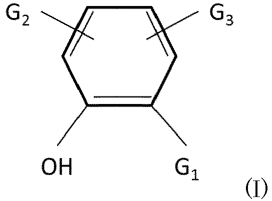 dans laquelle :
- G₁ représente un groupe hydroxyle, carboxyle, alcoxyle ou l'atome d'hydrogène ;
- G₂ représente un groupe hydroxyle ou l'atome d'hydrogène ;
- G₃ représente un groupe hydroxyle, carboxyle, hydrogénocarbonyle, carboxylalkyle, amino, aminoalkyle, ou l'atome d'hydrogène ;
au moins un des substituant G₁ à G₃ comprenant un atome d'oxygène, la masse molaire dudit composé phénolique étant au plus égale à 1000 g/mol,
ladite composition étant dépourvue de soufre moléculaire ou en comprenant moins de 1 pce.

2. Composition de caoutchouc selon la revendication précédente dans laquelle ledit composé phénolique de formule générale (I) est substitué par au moins deux groupes hydroxyles.

3. Composition de caoutchouc selon l'une quelconque des revendications précédentes dans laquelle ledit composé phénolique de formule générale (I) est substitué par au moins un groupe carboxyle.

4. Composition de caoutchouc selon l'une quelconque des revendications précédentes dans laquelle G₁ et G₃ sont choisis indépendamment parmi les groupes hydroxyle, carboxyle et l'atome d'hydrogène.

5. Composition de caoutchouc selon l'une quelconque des revendications précédentes dans laquelle ledit composé phénolique de formule générale (I) est substitué au moins en position para d'un groupe hydroxyle.

6. Composition de caoutchouc selon la revendication 1 dans laquelle G₁, G₂ et G₃ représentent indépendamment un groupe hydroxyle ou l'atome d'hydrogène.

7. Composition selon l'une des revendications précédentes dans laquelle la masse molaire dudit composé phénolique est inférieure à 800 g/mol.

8. Composition selon l'une des revendications précédentes dans laquelle le taux de composé phénolique est compris entre 0,1 et 25 pce.

9. Composition de caoutchouc selon l'une quelconque des revendications précédentes dans laquelle le taux de charge renforçante est comprise entre 20 et 200 pce.

10. Composition de caoutchouc selon l'une quelconque des revendications précédentes comprenant au moins un élastomère fonctionnalisé.

11. Composition de caoutchouc selon la revendication 10 comprenant au moins un élastomère fonctionnalisé comprenant une fonction diène conjuguée.

12. Composite à base au moins d'un composant et d'une composition selon l'une des revendications 1 à 11.

13. Pneumatique comprenant une composition selon l'une des revendications 1 à 11 ou un composite selon la revendication 12.

## Patentansprüche

1. Kautschukzusammensetzung auf Basis von mindestens einem hoch ungesättigten Dienelastomer, einem verstärkenden Füllstoff und mindestens einer Phenolverbindung der allgemeinen Formel (I) 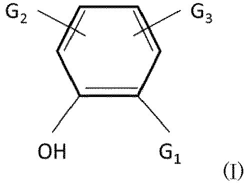 in der:
- G₁ für eine Hydroxyl-, Carboxyl- oder Alkoxygruppe oder ein Wasserstoffatom steht
- G₂ für eine Hydroxylgruppe oder ein Wasserstoffatom steht;
- G₃ für eine Hydroxyl-, Carboxyl-, Hydrogencarbonyl-, Carboxylalkyl-, Amino- oder Aminoalkylgruppe oder ein Wasserstoffatom steht;
wobei mindestens einer der Substituenten G₁ bis G₃ ein Sauerstoffatom enthält, wobei die Molmasse der Phenolverbindung höchstens gleich 1000 g/mol ist, wobei die Zusammensetzung frei von molekularem Schwefel ist oder weniger als 1 phe davon enthält.

2. Kautschukzusammensetzung nach dem vorhergehenden Anspruch, wobei die Phenolverbindung der allgemeinen Formel (I) durch mindestens zwei Hydroxylgruppen substituiert ist.

3. Kautschukzusammensetzung nach einem der vorhergehenden Ansprüche, wobei die Phenolverbindung der allgemeinen Formel (I) durch mindestens eine Carboxylgruppe substituiert ist.

4. Kautschukzusammensetzung nach einem der vorhergehenden Ansprüche, wobei G₁ und G₃ unabhängig aus Hydroxyl- und Carboxylgruppen und einem Wasserstoffatom ausgewählt sind.

5. Kautschukzusammensetzung nach einem der vorhergehenden Ansprüche, wobei die Phenolverbindung der allgemeinen Formel (I) zumindest in der para-Position zu einer Hydroxylgruppe substituiert ist.

6. Kautschukzusammensetzung nach Anspruch 1, wobei G₁, G₂ und G₃ unabhängig für eine Hydroxylgruppe oder ein Wasserstoffatom stehen.

7. Kautschukzusammensetzung nach einem der vorhergehenden Ansprüche, wobei die Molmasse der Phenolverbindung weniger als 800 g/mol beträgt.

8. Kautschukzusammensetzung nach einem der vorhergehenden Ansprüche, wobei der Gehalt an Phenolverbindung zwischen 0,1 und 25 phe liegt.

9. Kautschukzusammensetzung nach einem der vorhergehenden Ansprüche, wobei der Gehalt an verstärkendem Füllstoff zwischen 20 und 200 phe liegt.

10. Kautschukzusammensetzung nach einem der vorhergehenden Ansprüche, umfassend mindestens ein funktionalisiertes Elastomer.

11. Kautschukzusammensetzung nach Anspruch 10, umfassend mindestens ein funktionalisiertes Elastomer mit einer konjugierten Dienfunktion.

12. Verbund auf Basis von mindestens einer Komponente und einer Zusammensetzung nach einem der Ansprüche 1 bis 11.

13. Reifen, umfassend eine Zusammensetzung nach einem der Ansprüche 1 bis 11 oder einen Verbund nach Anspruch 12.

## Claims

1. Rubber composition based on at least one diene elastomer of the highly unsaturated type, a reinforcing filler and at least one phenolic compound of general formula (I) 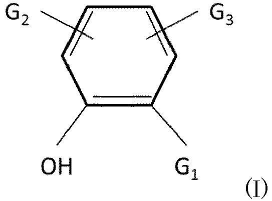 in which:
- G₁ represents a hydroxyl, carboxyl or alkoxy group or a hydrogen atom;
- G₂ represents a hydroxyl group or a hydrogen atom;
- G₃ represents a hydroxyl, carboxyl, hydrogenocarbonyl, carboxyalkyl, amino or aminoalkyl group or a hydrogen atom;
at least one of the substituents G₁ to G₃ comprising an oxygen atom, the molar mass of said phenolic compound being at most equal to 1000 g/mol,
said composition being free of molecular sulfur or comprising less than 1 phr thereof.

2. Rubber composition according to the preceding claim, in which said phenolic compound of general formula (I) is substituted with at least two hydroxyl groups.

3. Rubber composition according to either of the preceding claims, in which said phenolic compound of general formula (I) is substituted with at least one carboxyl group.

4. Rubber composition according to any one of the preceding claims, in which G₁ and G₃ are independently chosen from hydroxyl and carboxyl groups and a hydrogen atom.

5. Rubber composition according to any one of the preceding claims, in which said phenolic compound of general formula (I) is substituted at least in the position para to a hydroxyl group.

6. Rubber composition according to Claim 1, in which G₁, G₂ and G₃ independently represent a hydroxyl group or a hydrogen atom.

7. Composition according to one of the preceding claims, in which the molar mass of said phenolic compound is less than 800 g/mol.

8. Composition according to one of the preceding claims, in which the content of phenolic compound is between 0.1 and 25 phr.

9. Rubber composition according to any one of the preceding claims, in which the content of reinforcing filler is between 20 and 200 phr.

10. Rubber composition according to any one of the preceding claims, comprising at least one functionalized elastomer.

11. Rubber composition according to Claim 10, comprising at least one functionalized elastomer comprising a conjugated diene function.

12. Composite based at least on a component and on a composition according to one of Claims 1 to 11.

13. Tyre comprising a composition according to one of Claims 1 to 11 or a composite according to Claim 12.
